(19) Europäisches Patentamt
European Patent Office
Office européen des brevets

(11) **EP 4 528 881 A1**

(12) **EUROPEAN PATENT APPLICATION**
published in accordance with Art. 153(4) EPC

(43) Date of publication:
**26.03.2025 Bulletin 2025/13**

(21) Application number: 23807246.6

(22) Date of filing: 02.03.2023

(51) International Patent Classification (IPC):
$H01M\ 4/30^{(2006.01)}$     $H01M\ 4/24^{(2006.01)}$
$H01M\ 4/32^{(2006.01)}$     $H01M\ 4/62^{(2006.01)}$

(52) Cooperative Patent Classification (CPC):
H01M 4/24; H01M 4/32; H01M 4/62; H01M 10/30;
Y02E 60/10; Y02P 70/50

(86) International application number:
PCT/JP2023/007920

(87) International publication number:
WO 2023/223628 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.05.2022 JP 2022083184

(71) Applicant: Panasonic Intellectual Property
Management Co., Ltd.
Osaka-shi, Osaka 540-6207 (JP)

(72) Inventors:
• NAKAMURA, Yasushi
  Kadoma-shi, Osaka 571-0057 (JP)
• MUNESADA, Toshiyuki
  Kadoma-shi, Osaka 571-0057 (JP)
• OKABE, Akiko
  Kadoma-shi, Osaka 571-0057 (JP)

(74) Representative: Novagraaf International SA
Chemin de l'Echo 3
1213 Onex, Geneva (CH)

(54) **ALKALINE STORAGE BATTERY**

(57) An alkaline storage battery includes a positive electrode. The positive electrode includes a positive electrode mixture. The positive electrode mixture contains a nickel compound and a metal compound. The nickel compound is a positive electrode active material. The metal compound is a compound of at least one metal element selected from the group consisting of titanium, niobium, tungsten, vanadium, molybdenum, zirconium, and tantalum. A ratio Wm/Wn of a mass Wm of the metal compound contained in the positive electrode mixture to a mass Wn of the nickel compound contained in the positive electrode mixture in terms of nickel hydroxide ranges from 0.2/100 to 5.0/100. The metal compound contains iron at a mass ratio ranging from 10 ppm to 10000 ppm. A ratio We/Wp of a mass We of the alkaline electrolyte to a mass Wp of the positive electrode mixture ranges from 0.35 to 1.0.

FIG. 1

**Description**

TECHNICAL FIELD

The present disclosure relates to an alkaline storage battery.

BACKGROUND ART

Alkaline storage batteries, such as nickel-metal hydride batteries, are used in various usages. Various proposals related to the alkaline storage batteries have been made.

PTL 1 (Japanese Patent Laid-Open Publication No. 10-40948) discloses a charging characteristic improving agent which is to improve the charging characteristics of the alkaline storage batteries and which is characterized by containing an oxide or a hydroxide of one element or two or more elements selected from the group consisting of Sr, Sc, lanthanoid, Al, Ga, Ti, Zr, Nb, Bi and Ir.

PTL 2 (Japanese Patent No. 4474722) discloses a positive electrode for an alkaline storage battery which contains nickel hydroxide solid solution particles and a rare earth element containing Fe or an Fe compound or a compound of the rare earth element, wherein a content rate of the rare earth element or the compound of the rare earth element ranges from 0.1 to 10 wt.% with respect to the nickel hydroxide solid solution particles, and a content rate of Fe or the Fe compound ranges from 0.1 to 100 ppm with respect to the rare earth element or the compound of the rare earth element.

PTL 3 (Japanese Patent Laid-Open Publication No. 2002-298840) discloses a positive electrode active material for an alkaline storage battery which is characterized by including solid solution particles containing nickel hydroxide as a main component, wherein 1 to 30% of surface areas of the solid solution particles are coated with oxide particles of at least one element selected from the group consisting of yttrium, scandium and lanthanoid, and wherein outer surfaces of such coated particles are coated with a cobalt oxide having a cobalt average valence larger than 3.0.

CITATION LIST

Patent Literature

PTL 1: Japanese Patent Laid-Open Publication No. 10-40948
PTL 2: Japanese Patent No. 4474722
PTL 3: Japanese Patent Laid-Open Publication No. 2002-298840

SUMMARY OF INVENTION

Alkaline storage batteries are used in various situations. Accordingly, such an alkaline storage battery is required to have a small degradation of battery characteristics even used in environments of various temperatures.

An aspect of the present disclosure relates to an alkaline storage battery. An alkaline storage battery in an aspect of the present disclosure includes a positive electrode, a negative electrode, a separator, and an alkaline electrolyte. The positive electrode includes a positive electrode current collector and a positive electrode mixture supported by the positive electrode current collector. The positive electrode mixture contains a nickel compound and a metal compound. The nickel compound is a positive electrode active material The metal compound is a compound of at least one metal element selected from the group consisting of titanium, niobium, tungsten, vanadium, molybdenum, zirconium, and tantalum. A ratio $Wm/Wn$ ranges from $0.2/100$ to $5.0/100$ where $Wm$ is a mass of the metal compound contained in the positive electrode mixture and $Wn$ is a mass of the nickel compound contained in the positive electrode mixture in terms of nickel hydroxide. The metal compound contains iron at a mass ratio ranging from 10 ppm to 10000 ppm. A ratio $We/Wp$ ranges from 0.35 to 1.0 where $We$ is a mass of the alkaline electrolyte and $Wp$ is a mass of the positive electrode mixture.

Items recited in two or more claims which are selected arbitrarily from a plurality of claims included in the appended CLAIMS may be combined as far as such combination is possible. Also, the configurations described in the exemplary embodiment may be arbitrarily combined as far as such combination is possible.

Alkaline storage battery according to the present disclosure has a small degradation of battery characteristics even when the battery is used in a low temperature environment or in a high temperature environment.

BRIEF DESCRIPTION OF DRAWINGS

FIG. 1 is a partially exploded perspective view of an alkaline storage battery according to Exemplary Embodiment 1.
FIG. 2 is an enlarged cross-sectional view of an electrode group of the alkaline storage battery shown in FIG. 1.

DESCRIPTION OF EMBODIMENT

Although an exemplary embodiment of the present disclosure will hereinafter be described with some examples, it should be noted that the present disclosure is not limited to the examples described below. Although specific numerical values and materials will sometimes be exemplified in the following description, other numerical values and other materials may be applied as far as the invention according to the present disclosure can be practiced. In the present specification, the expression "ranging from numerical value A to numerical value B" includes numerical value A and numerical value B, and may be replaced with the expression "equal to or larger than numerical value A and equal to or smaller than numerical value B". In a case where upper limits and lower limits of numerical values regarding a specific physical property or condition are exemplified in the following description, any of the exemplified lower limits may be combined with any of the exemplified upper limits as far as the selected lower limit does not exceed the selected upper limit.

Alkaline Storage Battery

An alkaline storage battery according to the present exemplary embodiment may be referred to as "alkaline storage battery (A)". The alkaline storage battery (A) includes a positive electrode, a negative electrode, a separator, and an alkaline electrolyte. The positive electrode includes a positive electrode current collector and a positive electrode mixture supported by the positive electrode current collector. The positive electrode mixture contains a nickel compound and a metal compound. The nickel compound is a positive electrode active material The metal compound may be referred to as "metal compound (M)". The metal compound (M) is a compound of at least one metal element selected from the group consisting of titanium (Ti), niobium (Nb), tungsten (W), vanadium (V), molybdenum (Mo), zirconium (Zr), and tantalum (Ta).

The alkaline storage battery (A) satisfies the following conditions (1)-(3):

(1) A ratio $W_m/W_n$ ranges from 0.2/100 to 5.0/100 wherein $W_m$ is a mass of the metal compound (M) contained in the positive electrode mixture and $W_n$ is a mass of the nickel compound (the positive electrode active material) contained in the positive electrode mixture in terms of nickel hydroxide.
(2) The metal compound (M) contains iron (Fe) at a mass ratio ranging from 10 ppm to 10000 ppm
(3) A ratio $W_e/W_p$ ranges from 0.35 to 1.0 where $W_e$ is a mass of the alkaline electrolyte contained in the battery and $W_p$ is a mass of the positive electrode mixture contained in the battery.

As shown later in working examples, the alkaline storage battery (A) suppresses an increase in the battery resistance even after the trickle charging in a high temperature condition and the trickle charging in a low temperature condition have been repeated.

PTLs 1-3 disclose techniques using additives containing rare earth elements. PTL 1 teaches that an additive containing a rare earth element suppresses generation of oxygen during charging in a high temperature condition. However, the inventors of the present application have found that the battery characteristics reduce largely when the trickle charging in a high temperature condition and the trickle charging in a low temperature condition are repetitively performed even if the additive containing a rare earth element is used. Although it is not clear at present why this phenomenon occurs, it can be thought, as one reason, that the trickle charging in a low temperature condition would cause γ-nickel oxyhydroxide to be produced, so that the positive electrode tends to swell. The swelling of the positive electrode causes an increase in the electrolyte contained in the positive electrode, so that the battery resistance increases to reduce the battery characteristics.

The inventors of the present application found, as a result of studies, that a configuration of the above-described alkaline storage battery (A) suppresses the increase in the battery resistance even after the trickle charging in a high temperature condition and the trickle charging in a low temperature condition have been repetitively performed. The present disclosure is based on this new knowledge.

The alkaline storage battery (A) has a small degrading of battery characteristics even charging and discharging in a high temperature condition and in a low temperature condition are repetitively performed. Accordingly, the alkaline storage battery (A) may be used for various applications under various environments. The alkaline storage battery (A) may preferably be used for a backup power supply and an emergency power supply.

The metal compound (M) may be a compound other than a hydroxide and an oxide, but may preferably be a hydroxide or an oxide. The positive electrode mixture may contain a single kind of metal compound (M) or may contain plural kinds of metal compounds.

Examples of the metal compound (M) include titanium include $TiO_2$ and $TiO_2$-$nH_2O$ (metatitanic acid). The crystalline form of $TiO_2$ may be any of the rutile-type and the anatase-type, but may more preferably be the anatase-type titanium dioxide. Examples of the metal compound (M) containing niobium include $Nb_2O_3$. Examples of the metal compound (M) containing tungsten include $WO_3$. Examples of the metal compound (M) containing vanadium include $V_2O_5$. Examples of the metal compound (M) containing molybdenum include $MoO_3$. Examples of the metal compound (M) containing zirconium include $ZrO_2$. Examples of the metal compound (M) containing tantalum include $Ta_2O_5$. As described above, examples of the metal compound (M) include titanium oxides, niobium oxides, tungsten oxides, vanadium oxides, molybdenum oxides, zirconium oxides, and tantalum oxides. The metal compound (M) may be a compound containing titanium and/or a compound containing niobium. Alternatively, the metal compound (M) may be a titanium oxide and/or a niobium oxide.

As shown in the above condition (1), the ratio Wm/Wn ranges from 0.2/100 to 5.0/100. A value obtained by multiplying the ratio Wm/Wn by 100 is a percentage (%) of the mass Wm of the metal compound (M) contained in the positive electrode mixture to the mass Wn of the nickel compound contained in the positive electrode mixture in terms of nickel hydroxide ($Ni(OH)_2$). Specifically, the percentage of the mass Wm to the mass Wn ranges from 0.2% to 5.0%. Here, the mass of the nickel compound in terms of nickel hydroxide is the mass converted on the assumption that all of the nickel compound is the nickel hydroxide, and is obtained by dividing the mass of Ni atoms in the nickel compound by the molar mass of Ni and then multiplying the division result by the molar mass of the nickel hydroxide. The mass of Ni atoms in the nickel compound may be obtained by analyzing the positive electrode mixture by the inductively coupled plasma spectrometry.

The ratio Wm/Wn is equal to or larger than 0.2/100, may be equal to or larger than 1.0/100, and may be equal to or larger than 2.0/100. The ratio Wm/Wn is equal to or smaller than 5.0/100, and may be equal to or smaller than 2.0/100. The ratio Wm/Wn ranges from 0.2/100 to 5.0/100, may range from 1.0/100 to 5.0/100, or may range from 2.0/100 to 5.0/100. In these ranges, the upper limit may be 2.0/100 or 1.0/100 as long as the lower limit is not equal to or larger than the upper limit.

The metal compound (M) added reduces the quantity of oxygen generated at the positive electrode during charging in a high temperature condition (e.g., during the trickle charging in a high temperature condition). Reducing the quantity of generated oxygen suppresses consumption of the electrolyte caused by the oxidation of the negative electrode. This configuration resultantly suppresses an increase in an inner resistance of the battery. The ratio Wm/Wn equal to or larger than 0.2/100 adequately suppresses the generation of oxygen. The ratio Wm/Wn equal to or smaller than 5.0/100 suppresses the increase in the resistance caused by a large amount of metal compound (M) with a low electrical conductivity.

As shown in the above condition (2), the content rate (mass ratio) of iron contained in the metal compound (M) is equal to or larger than 10 ppm, and may be equal to or larger than 100 ppm or equal to or larger than 1000 ppm. The content rate is equal to or smaller than 10000 ppm, and may be equal to or smaller than 1000 ppm or equal to or smaller than 100 ppm. The content rate is in a range from 10 to 10000 ppm, and may range from 100 ppm to 10000 ppm or range from 1000 ppm to 10000 ppm. In these ranges, the upper limit may be 1000 ppm or 100 ppm as long as the lower limit is not equal to or larger than the upper limit.

A part of the metal compound (M) is pushed out of the positive electrode by oxygen generated in the positive electrode upon overcharging of the battery and moves to the separator and the negative electrode. When the metal compound (M) exists in the positive electrode, the iron contained in the metal compound (M) is not eluted due to the electric potential. However, when the metal compound (M) moves to the separator or the negative electrode, the iron contained in the metal compound (M) is gradually eluted and reprecipitated uniformly on the surface of the particle of the positive electrode active material. The reprecipitated iron suppresses production of $\gamma$-nickel oxyhydroxide. This resultantly suppresses swelling of the positive electrode, so that reduction of the electrolyte at the separator and the negative electrode is suppressed. Accordingly, the increase in the internal resistance of the battery is suppressed during charging (especially during the trickle charging). This effect may be obtained by the content rate (mass ratio) of iron contained in the metal compound (M) equal to or larger than 10 ppm. The content rate of iron equal to or smaller than 10000 ppm suppresses reduction of the charging efficiency and corrosion of the hydrogen-absorbing alloy which would be caused by the presence of an excessive amount of iron.

As shown in the above condition (3), the ratio We/Wp of the mass We of the alkaline electrolyte contained in the battery to the mass Wp of the positive electrode mixture contained in the battery is equal to or larger than 0.35, and may be equal to or larger than 0.50, or may be equal to or larger than 0.60 or may be equal to or larger than 0.70. The ratio We/Wp is equal to or smaller than 1.0, and may be equal to or smaller than 0.70 or equal to or smaller than 0.60 or equal to or smaller than 0.50. The ratio We/Wp ranges from 0.35 to 1.0, and may range from 0.50 to 1.0 or may range from 0.60 to 1.0 or may range from 0.70 to 1.0. In these ranges, the upper limit may be 0.70 or 0.60 or 0.50 as long as the lower limit is not equal to or larger than the upper limit. The electrolyte is removed by disassembling the battery, followed by washing with water and drying. The mass We of the electrolyte may be obtained by measuring and calculating a difference of the masses of the battery before and after removing the electrolyte. The positive electrode plate may be dissolved by a weak acid, such as acetic acid, to leave the foamed nickel porous body. The mass Wp of the positive electrode mixture may be obtained as a difference of the masses of the positive electrode plate before and after dissolving the positive electrode plate.

The ratio We/Wp equal to or larger than 0.35 facilitates the movement of the metal compound (M) caused by the oxygen generated at the positive electrode. This provides the above-described advantageous effects. The ratio We/Wp equal to or smaller than 1.0 prevents a leak of the electrolyte from the exterior body (the battery case) which would be caused by an excessive amount of electrolyte.

The percentage of the positive electrode active material (the nickel compound) in the positive electrode mixture may be equal to or larger than 80 mass% or equal to or larger than 90 mass%.

In the alkaline storage battery (A), the positive electrode, the negative electrode, and the separator may constitute a wound assembly. An example of the wound assembly may have the following configurations (4)-(6):

(4) In the wound assembly, an outermost circumference of the negative electrode is located outer than an outermost circumference of the positive electrode.

(5) The negative electrode includes a negative electrode current collector and a negative electrode mixture layer disposed on the negative electrode current collector. The negative electrode mixture layer contains a hydrogen-absorbing alloy.

(6) In the wound assembly, a mass Mout of the hydrogen-absorbing alloy per a unit area on the outermost circumference (the layer constituting the outermost circumference of the wound assembly) of the negative electrode may be smaller than a mass Min of the hydrogen-absorbing alloy per a unit area in a part of the negative electrode other than the outermost circumference. The mass Mout and the mass Min may be a mass per an area of 1 $cm^2$.

The advantageous effects of the present disclosure can be obtained by the movement of a part of the metal compound (M) from the positive electrode caused by oxygen generated at the positive electrode. To cause the generation of oxygen uniformly throughout the entire positive electrode, the mass per a unit area of the negative electrode active material present at a position facing the positive electrode may be preferably uniform regardless of positions in the wound assembly. In a case where the negative electrode mixture layer exists on each of the opposite surfaces of the negative electrode current collector, the mass per a unit area of the negative electrode active material (e.g., the hydrogen-absorbing alloy) means the mass of the negative electrode active material existing on both of the opposite surfaces. Suppose that the negative electrode current collector be 1 cm long and 1 cm wide, the mass of the negative electrode active material existing on one surface of a negative electrode current collector be A grams, and the negative electrode active material existing on the other surface of the negative electrode current collector be B grams. In this case, the mass of the negative electrode active material per 1 $cm^2$ of the negative electrode is A+B grams.

The positive electrode mixture layer and the negative electrode mixture layer may be disposed to face each other in an appropriate mass ratio. However, in the case where the outermost circumference of the negative electrode is located outer than the outermost circumference of the positive electrode, the mass per a unit area of the negative electrode active material located on the outermost circumference of the negative electrode is larger than the appropriate amount for the positive electrode mixture layer. Therefore, a general alkaline storage battery hardly causes the generation of oxygen uniformly throughout the entire positive electrode. On the other hand, the above configuration (6) causes the generation of oxygen more uniformly throughout the entire positive electrode.

A ratio Mout/Min of the mass Mout of the hydrogen-absorbing alloy per a unit area on the outermost circumference of the negative electrode to the mass Min of the hydrogen-absorbing alloy per a unit area in the part of the negative electrode other than the outermost circumference may be equal to or smaller than 0.9 or equal to or smaller than 0.8 or equal to or smaller than 0.6. The ratio Mout/Min may be equal to or larger than 0.3 or equal to or larger than 0.4.

The above-described configuration (6) may be provided by adopting the following configuration (7) and/or (8). The alkaline storage battery (A) including the above-described wound assembly may have the above-described configurations (4)-(6) in combination with the following configuration (7) and/or (8). As another example, the alkaline storage battery (A) including the above-described wound assembly may have the above-described configurations (4) and (5) in combination with the following configuration (8). In this case also, the advantageous effects can be obtained.

(7) A thickness D1 of the negative electrode mixture layer in the outermost circumference of the negative electrode is thinner than a thickness D0 of a negative electrode mixture layer in a part of the negative electrode inner than the outermost circumference of the negative electrode.

(8) A thickness Dout of the negative electrode mixture layer at a part of the negative electrode disposed on an outer side (the outer circumference side) of the negative electrode current collector in the outermost circumference of the negative electrode is thinner than a thickness Din of the negative electrode mixture layer at a part disposed on an inner side (the inner circumference side) of the negative electrode current collector in the outermost circumference of the negative electrode. In other words, in the outermost circumference of the negative electrode, the thickness Dout of the negative electrode mixture layer at the part disposed outer than the negative electrode current collector may be thinner than the thickness Din of the negative electrode mixture layer disposed on the other part.

Regarding the above-described configuration (7), a ratio D0/D1 of the thickness D0 to the thickness D1 may be equal to or smaller than 0.9 or equal to or smaller than 0.8 or equal to or smaller than 0.6. The ratio D0/D1 may be equal to or larger than 0.3 or equal to or larger than 0.4.

Regarding the above-described configuration (8), the ratio Dout/Din of the thickness Dout of the negative electrode mixture layer at the part disposed on the outer side of the negative electrode current collector in the outermost circumference of the negative electrode to the thickness Din of the negative electrode mixture layer at the part disposed on the inner side of the negative electrode current collector in the outermost circumference of the negative electrode may be equal to or smaller than 0.9 or equal to or smaller than 0.5 or equal to or smaller than 0.3 or may be 0. The ratio D0/D1 is equal to or larger than 0, and may be equal to or larger than 0.2 or equal to or larger than 0.4.

Regarding the thickness D0, thickness D1, thickness Dout and thickness Din in a case where each of these thicknesses is not constant and varies depending on the position, the magnitude relationship may be a magnitude relationship of their average values, and the ratio may be a ratio of the average values. For example, the ratio D0/D1 may be replaced by a ratio "an average value of D0"/ "an average value of D1". Similarly, the ratio Dout/Din may be replaced by a ratio "an average value of Dout"/ "an average value of Din". Here, the average value of the thickness D0 can be obtained by measuring thicknesses at five points selected in the part concerned, and calculating an average of the measured thicknesses of the five points. The five points may be selected at constant intervals in the longitudinal direction (the circumferential direction) and each on the center in the width direction.

The alkaline electrolyte of the alkaline storage battery (A) may be an electrolyte having sodium hydroxide dissolved therein. The concentration of sodium hydroxide in the alkaline electrolyte may be higher than the concentration of potassium hydroxide in the alkaline electrolyte. In other words, the concentration of sodium ions in the alkaline electrolyte may be higher than the concentration of potassium ions in the alkaline electrolyte. Examples of the electrolyte having this configuration include an alkaline electrolyte in which both sodium hydroxide and potassium hydroxide are dissolved, and an alkaline electrolyte in which potassium hydroxide is not dissolved and sodium hydroxide is dissolved. In other words, the examples of the electrolyte having this configuration includes an electrolyte in which the concentration of potassium hydroxide is zero.

In a case where the alkaline storage battery (A) is charged under a high temperature environment, sodium hydroxide is preferably used as a solute. Therefore, in the case where the alkaline storage battery (A) is charged under a high temperature environment, an alkaline electrolyte in which the concentration of sodium hydroxide is higher than the concentration of potassium hydroxide is preferably used.

Method of Producing Metal Compound (M)

There are no limitations as to a method of producing the metal compound (M) containing iron at a mass ratio ranging from 10 ppm to 10000 ppm. The metal compound (M) may be produced by dissolving iron in an aqueous solution which becomes a material of the metal compound (M) so that iron atoms are incorporated into particles of the metal compound (M) during precipitation of the metal compound (M). The concentration of the iron ions in the aqueous solution may be controlled to change the content rate of iron in the metal compound (M).

As another method, an aqueous solution which becomes a material of the metal compound (M) and a solution in which iron is dissolved may be simultaneously dripped into an alkaline solution so that iron atoms are incorporated into particles of the metal compound (M) during precipitation of the metal compound (M). The concentration of iron ions in the aqueous solution or the dripping speed may be controlled to change the content rate of iron in the metal compound (M).

As still another method, the metal compound (M) containing iron may be produced by mixing a powder which becomes a material of the metal compound (M) with iron or an iron oxide, burning the mixture, and crushing the burnt product. The mixing ratio before burning may be controlled to change the content rate of iron in the metal compound (M).

The content rate of iron in the metal compound (M) may be adjusted by producing plural kinds of metal compounds (the metal compounds (M)) which are different in the content rate of iron from one another, and mixing some of those metal compounds.

Method of Producing Positive Electrode

There are no limitations as to the method of producing the positive electrode, and the positive electrode may be produced by a method similar to any of the known methods. As an example of the producing method, a positive electrode paste is prepared by mixing particles of a nickel compound (particles of the positive electrode active material) and a material containing the metal compound (M). Then, a positive electrode current collector is coated or filled with the positive electrode paste, and dried to form a positive electrode mixture supported on the positive electrode current collector (the positive electrode mixture layer). At this time, the positive electrode mixture layer may be compressed (or rolled) as needed.

There are no limitations as to the form of the metal compound (M) at the time being added to the positive electrode paste. Typically, the metal compound (M) may be added to the positive electrode paste in the form of particles.

The positive electrode paste may contain a dispersion medium and, if necessary, may contain another component (such as an electrically conductive material, a binder or a thickener). The dispersion medium may be water, an organic medium, or a mixture medium containing two or more liquid media selected from water and organic media.

Examples of the electrically conductive material and the binder will be described later. Examples of the thickener include: cellulose derivatives, such as carboxymethylcellulose, its denatured product (including salts, such as sodium salt and ammonium salt), and methylcellulose; saponified polymers having a vinyl acetate unit, such as polyvinyl alcohol; and polyalkylene oxides, such as polyethylene oxide. Each of these thickeners may be used independently or two or more of them may be used in combination. The quantity of the thickener per 100 parts by mass of the positive electrode active material may be equal to or smaller than 5 parts by mass or may range from 0.01 parts by mass to 3 parts by mass.

Method of Producing Alkaline Storage Battery (A)

There are no limitations as to the method of producing the alkaline storage battery (A) including the above-described positive electrode, and any known producing method may be used. Specifically, an electrode group 15 including a positive electrode, a negative electrode, and a separator is first produced. Then, the electrode group and the electrolyte are accommodated in an exterior body. The alkaline storage battery is thus produced.

An example structure of the alkaline storage battery (A) and examples of their structural elements will be described below. However, it should be noted that the structure and the structural elements of the alkaline storage battery (A) are not limited to the examples shown hereinafter. The structural elements at the parts other than the characterizing features of the present disclosure may be constituted by applying any known structural elements.

The alkaline storage battery (A) includes an exterior body, an electrode group, and an alkaline electrolyte. The electrode group and the alkaline electrolyte are accommodated in the exterior body. The form of the electrode group may not be limited to a particular form, and may be a wound assembly or may be a form other than the wound assembly (e.g., a laminated body). The electrode group in the form of the wound assembly may be formed by winding a positive electrode, a negative electrode, and a separator such that the separator is disposed between the positive electrode and the negative electrode. The electrode group in the form of the laminated body may be formed by laminating a positive electrode, a negative electrode, and a separator such that the separator is disposed between the positive electrode and the negative electrode.

Positive Electrode

The positive electrode includes a positive electrode current collector and a positive electrode mixture supported by the positive electrode current collector (a positive electrode mixture layer). The positive electrode may be a paste-type positive electrode.

The positive electrode current collector may not particularly be limited, and may be any known positive electrode current collector. Examples of the positive electrode current collector include a porous current collector made of a metal (e.g., nickel or a nickel alloy). A specific example of the positive electrode current collector may be a nickel foam or a sintered nickel plate.

The positive electrode mixture may contain particles of nickel compound (the positive electrode active material) and may further contain another constituent (e.g., an electrically conductive material and a binder). The particles of nickel compound may be particles of any known nickel compound generally used in the alkaline storage batteries (e.g., nickel hydroxide). A part of the nickel hydroxide in the positive electrode mixture may have been changed to a nickel oxyhydroxide.

The particles of nickel compound may contain a small amount of constituent other than the nickel hydroxide and the nickel oxyhydroxide. The surface of the particle of nickel compound may be coated with another compound. Examples of the compound used for such coating include metal hydroxides. Specific examples of the compound used for the coating include cobalt hydroxide, g-cobalt oxyhydroxide, and b-cobalt oxyhydroxide. In the case where the particles of nickel compound are coated with another compound, the mass Wn of the nickel compound contained in the positive electrode mixture does not include the mass of such another compound.

The electrically conductive material may not particularly be limited, and may be any known electrically conductive material. Examples of the electrically conductive material include: graphite, such as natural graphite (e.g., flake graphite), synthetic graphite, and expanded graphite; carbon blacks, such as acetylene black and ketjen black; electrically conductive fibers, such as carbon fibers and metal fibers; metal particles, such as nickel powder and cobalt powder; and organic electrically conductive materials, such as polyphenylene derivative. Each of these electrically conductive materials may be used independently or two or more of these electrically conductive materials may be used in combination. The electrically conductive material may be an electrically conductive cobalt compound (e.g., cobalt hydroxide or g-cobalt oxyhydroxide).

The quantity of the electrically conductive material may range from 0.01 to 20 parts by mass (e.g., in a range from 0.1 to 10 parts by mass) per 100 parts by mass of the active material.

The electrically conductive material may be added to the positive electrode paste and mixed with other constituents. The surfaces of the active material particles may be previously coated with the electrically conductive material. The method of coating with the electrically conductive material may not particularly be limited, and may be any known method. For example, the coating may be made by sprinkling the electrically conductive material on the surfaces of the particles of the active material. As another method, the coating may be made by attaching a dispersion liquid containing the electrically conductive material to the surfaces of the particles of the active material, and drying. As still another method, the coating may be made by a mechano-chemical method.

The binder may not particularly be limited, and may be any known binder generally used for the alkaline storage batteries. Examples of the binder include: rubber materials, such as styrene-butadiene copolymer rubber; polyolefin resins, such as polyethylene and polypropylene; fluorine resins, such as polyvinylidene fluoride; acrylic resins, such as ethylene-acrylic acid copolymer and ethylene-methyl acrylate copolymer, including their Na ion crosslink products. Each of these binders may be used independently or two or more of these binders may be used in combination. The quantity of the binder per 100 parts by mass of the positive electrode active material may be equal to or smaller than 7 parts by mass or may range from 0.01 to 5 parts by mass.

Negative Electrode

The negative electrode may not particularly be limited, and may be selected depending on the kind of the alkaline storage battery (A). The negative electrode may be any known negative electrode generally used as the negative electrodes for the alkaline storage batteries.

The negative electrode may include a negative electrode current collector and a negative electrode mixture layer supported by the negative electrode current collector. The negative electrode current collector may not particularly be limited, and may be any known negative electrode current collector. Examples of the negative electrode current collector include porous or non-porous sheets of metal (e.g., stainless steel, nickel, and a nickel alloy).

The negative electrode may be formed by attaching the negative electrode mixture containing the negative electrode active material to the negative electrode current collector. The negative electrode mixture may be used in the form of a paste containing a dispersion medium. In an example of producing the negative electrode, first, the negative electrode mixture paste containing the negative electrode active material is prepared. Then, the negative electrode current collector is coated or filled with the negative electrode paste, dried and rolled. The negative electrode including the negative electrode current collector and the negative electrode mixture layer supported by the negative electrode current collector is thus produced.

Examples of the alkaline storage battery (A) include the nickel-hydrogen storage batteries and the nickel-cadmium storage batteries. In the case where the alkaline storage battery (A) is the nickel-hydrogen storage battery, the negative electrode active material may be a hydrogen-absorbing alloy configured to electrochemically absorb and release hydrogen. The hydrogen-absorbing alloy may not particularly be limited, and may be any known hydrogen-absorbing alloy. In the case where the alkaline storage battery (A) is the nickel-cadmium storage battery, the negative electrode active material may be a cadmium compound (e.g., cadmium hydroxide).

The negative electrode mixture may contain another constituent (e.g., an electrically conductive material, a binder, and a thickener) other than the negative electrode active material as needed. The dispersion medium, the electrically conductive material, the binder and the thickener may be the same as those exemplified regarding the positive electrode. The quantity of each of the electrically conductive material, the binder and the thickener may range exemplified as the quantity per 100 parts by mass of the positive electrode active material.

Alkaline Electrolyte

The alkaline electrolyte may be an aqueous solution containing an alkaline solute. Examples of the solute include alkaline metal hydroxides. Specific examples of the alkaline metal hydroxides include lithium hydroxide, potassium hydroxide, and sodium hydroxide. A single solute may be used independently or two or more solutes may be used in combination.

The concentration of the solute contained in the alkaline electrolyte (specifically an alkaline metal hydroxide) may range from 2.5 to 13 mol/L (e.g., from 3 to 12 mol/L). The specific gravity of the alkaline electrolyte may range from 1.1 to 1.6 (e.g., from 1.2 to 1.5).

The alkaline electrolyte may preferably contain sodium hydroxide. The alkaline electrolyte may contain sodium hydroxide and another alkaline metal hydroxide (lithium hydroxide and/or potassium hydroxide). The alkaline electrolyte may contain only sodium hydroxide as the solute.

The concentration of the sodium hydroxide contained in the alkaline electrolyte may range from 2.5 to 11.5 mol/L, and may preferably range from 3.5 to 10.5 mol/L (e.g., from 4 to 10 mol/L). The concentration of the sodium hydroxide in the above-described range (especially, a high concentration) allows the charging efficiency to be high even in the case of charging under a high temperature environment. The concentration of the sodium hydroxide in the above-described range (especially, a high concentration) suppresses reduction in the average discharging voltage while maintaining a high charging efficiency. As a result, the cycle life of the battery can be prolonged.

Separator

The separator may not particularly be limited, and may be any known separator generally used for the alkaline storage batteries. Examples of the form of the separator include microporous membranes, non-woven clothes, and woven clothes. The separator may be made of a material having an electrical insulation. Example materials of the separator include polyolefin resins, such as polyethylene and polypropylene; fluorine resins; and polyamide resins.

Other Elements

The structural elements other than those described hereinabove (the exterior body, leads, and so on) may not particularly be limited, and may be known elements generally used for the alkaline storage batteries. In a case where the alkaline storage battery (A) is a cylindrical battery, an example of the exterior body may include a battery case having a cylindrical shape with a bottom, a sealing body sealing the battery case, and a gasket.

An exemplary embodiment will be specifically described below with reference to the drawings. The above-described structural elements can be applied to the structural elements of the exemplary embodiment described hereinafter. Also, the structural elements of the exemplary embodiment described hereinafter may be changed based on the above description. Also, the matters described hereinafter may be applied to the above exemplary embodiment. Also, in the exemplary embodiment described hereinafter, structural elements that are not essential to the alkaline storage battery according to the present disclosure may be omitted.

Exemplary Embodiment 1

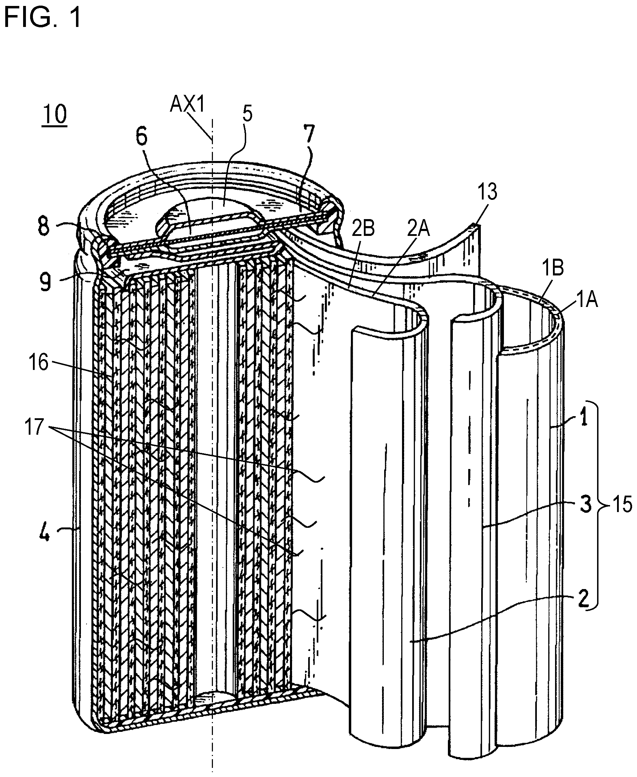

An alkaline storage battery 10 according to Exemplary Embodiment 1 is shown in FIG. 1. FIG. 1 is a partially exploded perspective view of the alkaline storage battery 10. The alkaline storage battery 10 includes a battery case 4, an electrode group 15, and an alkaline electrolyte 17. The electrode group 15 and the alkaline electrolyte 17 are accommodated in the battery case 4. The battery case 4 is a cylindrical case with a bottom. Each of a negative electrode 1, a positive electrode 2, and separators 3 and 13 is in the form of a sheet. The electrode group 15 is a wound assembly 16 formed by stacking the negative electrode 1, the positive electrode 2 and the separators 3 and 13 on one another such that the separators 3 and 13 are disposed between the negative electrode 1 and the positive electrode 2, and winding the negative electrode 1, the positive electrode 2 and the separators 3 and 13 about a center axis AX1. An opening of the battery case 4 is sealed with a sealing body 7 and an insulating gasket 8. The sealing body 7 includes a positive electrode terminal 5 and a safety valve 6. The positive electrode 2 and the sealing body 7 are electrically connected to each other via a positive electrode current collector plate 9. The battery case 4 is electrically connected to the negative electrode 1 to function as a negative electrode terminal.

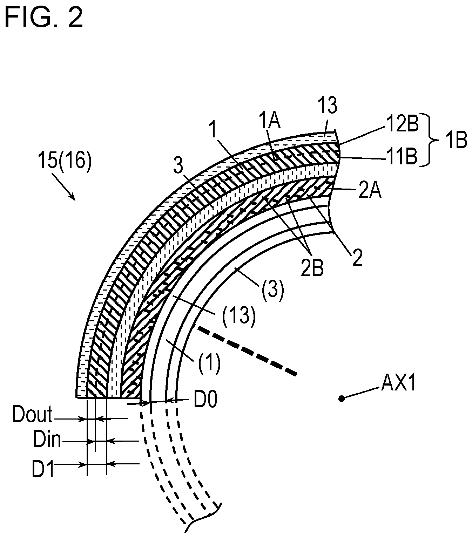

FIG. 2 is an enlarged dross-sectional view of the electrode group 15 (the wound assembly 16). In the wound assembly 16, the separators 3 and 13 extend from the outside of the positive electrode 2 to the space between the negative electrode 1 and the positive electrode 2, which constitute the wound layers adjacent to each other in the electrode group 15, to prevent the negative electrode 1 and the positive electrode 2 from directly contacting each other. The positive electrode 2 includes a positive electrode current collector 2A and a positive electrode mixture layer 2B disposed in the positive electrode current collector 2A. The negative electrode 1 includes a negative electrode current collector 1A and a negative electrode mixture layer 1B disposed on the negative electrode current collector 1A. The alkaline storage battery 10 has the structure as described above. A thickness $D1$ of the negative electrode mixture layer 1B in the outermost circumference of the negative electrode 1 may be thinner than a thickness $D0$ of the negative electrode mixture layer 1B located inner than the outermost circumference of the negative electrode 1. The negative electrode 1 may be wound such that the negative electrode mixture layer 1B in the outermost circumference of the negative electrode 1 has a portion 12B that is disposed on the outer side of the negative electrode current collector 1A and a portion 11B that is disposed on the inner side of the negative electrode current collector 1A. A thickness $Dout$ of the portion 12B of the negative electrode mixture layer 1B may be thinner than a thickness $Din$ of the portion 11B of the negative electrode mixture layer 1B.

Working Examples

The present disclosure will be detailed below based on working examples. In the following working examples, plural nickel-hydrogen storage batteries were produced and evaluated.

Experimental Example 1

In Experimental Example 1, plural kinds of nickel-hydrogen storage batteries were produced by changing the metal compound added to the positive electrode mixture. Specifically, plural batteries each having the same structure as the structure shown in FIG. 1 were produced in the following steps.

(1) Producing Positive Electrode

Plural kinds of positive electrodes 2 were each produced in the following manner. A positive electrode paste was produced by mixing particles of nickel hydroxide coated with cobalt oxyhydroxide (100 parts by mass as the nickel hydroxide), 1 part by mass of the metal compound shown in TABLE 1, 0.1 parts by mass of carboxymethylcellulose (the thickener), and water. Next, a foamed nickel porous sheet (the positive electrode current collector 2A) was filled with the positive electrode paste, and dried. The obtained sheet was compressed in its thickness direction, and cut into a piece having a predetermined size (a length of 80 mm and a width of 43 mm) to produce a positive electrode 2. The metal compound was changed as shown in TABLE 1 to produce the plural kinds of positive electrodes 2.

The particles of nickel hydroxide coated with cobalt oxyhydroxide were produced in the following steps. First, 100 parts by mass of nickel hydroxide particles and cobalt sulfate aqueous solution were mixed to obtain a mixture solution. An ammonia solution and an aqueous sodium hydroxide solution were dripped into the mixture solution at a predetermined drip rate to coat the nickel hydroxide particles with cobalt hydroxide. The obtained particles were cleaned, dried, and oxidized by air oxidation at 90 °C under existence of the aqueous sodium hydroxide solution. In the manner as described above, particles of nickel hydroxide coated with cobalt oxyhydroxide were obtained.

The metal compounds were produced in the following steps. A titanium oxide ($TiO_2$) containing iron was produced by simultaneously dripping a titanium tetrachloride aqueous solution and a ferric chloride (II) aqueous solution into an aqueous sodium hydroxide solution to be neutralized and hydrolyzed. A titanium oxide ($TiO_2$) not containing iron was produced by the same method as the above-described method except that ferric chloride (II) aqueous solution was not added. An ytterbium oxide containing iron was produced by simultaneously dripping an ytterbium nitrate aqueous solution and a ferric sulfate (II) aqueous solution into an aqueous sodium hydroxide solution. An yttrium oxide containing iron was produced by simultaneously dripping an ytterbium nitrate aqueous solution and a ferric sulfate (II) aqueous solution into an aqueous sodium hydroxide solution. The aqueous solution of the iron compound was added to each metal compound solution so that the content rate of iron in the metal compound became the values as shown in TABLE 1. As another manner, the metal compound may be produced plural times to produce plural metal compounds while the content rate of iron in each of the plural metal compounds may be analyzed by the ICP spectroscopy or the like, and some of the plural metal compounds may be mixed so that the amount of iron contained in the mixture becomes a specified amount.

(2) Producing Negative Electrode

100 parts by mass of hydrogen-absorbing alloy of LaNiCoMnAl based, 0.2 parts by mass of carboxymethylcellulose (the thickener), 0.2 parts by mass of ketjen black (the electrically conductive material) and 0.5 parts by mass of styrene-butadiene rubber (the binder) were mixed. Water was added to the obtained mixture and further mixed to prepare a negative electrode paste.

The negative electrode paste was applied to both surfaces of the negative electrode current collector 1A to form a coating film on each of the both surfaces. The negative electrode current collector 1A was produced using a nickel-plated punching metal made of iron. The coating film was dried, and pressed together with the negative electrode current collector 1A to form a negative electrode mixture layer 1B. The negative electrode mixture layer 1B was formed so as to be substantially the same in thickness throughout the entire negative electrode 1. Next, the sheet including the negative electrode current collector 1A and the negative electrode mixture layer 1B was cut into a piece having a predetermined size (a length of 130 mm and a width of 43 mm) to obtain a negative electrode 1.

(3) Producing Alkaline Storage Battery

The produced positive electrode 2 and negative electrode 1, and separators 3 and 13 were wound to produce a wound assembly 16 (the electrode group 15). Each of the separators 3 and 13 was produced using a non-woven cloth made of sulfonated polypropylene.

Next, the wound assembly 16 and the alkaline electrolyte 17 were accommodated in the battery case 4. The concentration of the alkaline metal hydroxide in the alkaline electrolyte 17 was 5.5 mol/L. The alkaline metal hydroxide was made by mixing KOH, NaOH and LiOH at a mixing ratio as KOH : NaOH : LiOH = 2 : 7 : 1 (mol ratio). The alkaline electrolyte 17 was put into the battery case 4 by an amount of 20 mg per an apparent area of 1 cm$^2$ of the separators 3 and 13.

Next, the opening of the battery case 4 was sealed with the gasket 8 and the sealing body 7. At this moment, the foamed nickel porous body (the positive electrode current collector 2A) and the sealing body 7 (the positive electrode terminal 5) were electrically connected to each other via a connecting member. Also, the negative electrode 1 and the battery case 4 (the negative electrode terminal) were electrically connected to each other via a connecting member. In this manner, plural kinds of alkaline storage batteries (a battery A1 and batteries C1-C3) which were different from one another in the kind of the positive electrode 2 were produced.

In the above-described manner, plural kinds of AA alkaline storage batteries (nickel-hydrogen storage batteries) each having a theoretical capacity of 1200 mAh were produced. The produced batteries were activated by performing a single cycle of charging and discharging, and after that, evaluated in the following manners.

(4) Charging and Discharging Test and Evaluations

The batteries which had been produced in the above-described steps and activated were subjected to a charging and discharging test. Specifically, the charging cycle including a step satisfying the following condition (a) and a step satisfying the following condition (b) were repeated 25 times. A value indicated by "It" is a current value expressed by "a theoretical capacity"/1h, and It of each of the batteries in the working examples was It = 1200 mA.

    (a) Charge for 160 hours by a current value of 60 mA (0.05It) at 55 °C.
    (b) Charge for 160 hours by a current value of 60 mA (0.05It) at 0 °C.

In the manner as described above, the charging test that includes a high temperature trickle charging (the charging in the condition (a)) and a low temperature trickle charging (the charging in the condition (b)) were performed. Then, based on an initial resistance R0 of the battery before the charging test and a resistance R1 after the charging test, a life index X which is an inverse of the rising ratio of the resistance was calculated by the following formula:

$$\text{Life index } X = R0/R1$$

A part of the conditions for producing the batteries and the evaluation results are shown in TABLE 1. Battery A1 is a battery according to the present disclosure, and batteries Z1-Z3 are batteries of comparative examples. The values of the life index in TABLE 1 are relative values normalized such that the value of the life index X of battery A1 is 100. The term "Main Component of Solute" in TABLE 1 means a solute which occupies 50 mol% or more of the entire solute. The ratio Wm/Wn and the ratio We/Wp are the above-described ratios.

TABLE 1

| Battery | Metal Compound | | | Ratio We/Wp | Main Component of Solute | Life Index (Relative Value) |
| --- | --- | --- | --- | --- | --- | --- |
| | Material | Ratio Wm/Wn | Fe Contant (ppm) | | | |
| Z1 | $Y_2O_3$ | 1.0/100 | 1000 | 0.6 | NaOH | 60 |
| Z2 | $Yb_2O_3$ | 1.0/100 | 1000 | 0.6 | NaOH | 60 |
| Z3 | $TiO_2$ | 1.0/100 | None | 0.6 | NaOH | 60 |
| A1 | $TiO_2$ | 1.0/100 | 1000 | 0.6 | NaOH | 100 |

As shown in TABLE 1, batteries Z1 and Z2 have low life index in which the metal compound was the compound of a rare earth element, such as $Y_2O_3$ and $Yb_2O_3$. Battery Z3 has a low life index, in which the metal compound did not contain iron. This may be because of the above-described reasons. On the other hand, the life index of battery A1 according to the present disclosure was high. To be high in the life index means that the reduction of the battery characteristics is small in either the trickle charging in a high temperature condition and the trickle charging in a low temperature condition. On the other hand, in the batteries of the comparative examples, which were low in the life index, the battery characteristics were largely reduced in at least one of the trickle charging in a high temperature condition and the trickle charging in a low temperature condition.

Experimental Example 2

In Experimental Example 2, plural kinds of nickel-hydrogen storage batteries were produced by changing the quantity of the metal compound added to the positive electrode mixture. Specifically, the positive electrodes were produced by changing the quantity of the metal compound added to the positive electrode paste so that the values of the ratio Wm/Wn became the values as shown in TABLE 2. Batteries Z4 and Z5 and batteries B1-B4 were produced in the same method and conditions as those of producing battery A1 except that the quantity of the metal compound was changed.

The produced batteries were activated in the same way as that in the Experimental Example 1, and evaluated in the same way as that in Experimental Example 1. A part of the conditions for producing the batteries and the evaluation results are shown in TABLE 2. Batteries B1-B4 are batteries according to the present disclosure, and batteries Z4 and Z5 are batteries of comparative examples. The values of the life index in TABLE 2 are relative values normalized such that the value of the life index X of battery B2 is 100. Battery B2 is the same battery as battery A1.

TABLE 2

| Battery | Metal Compound | | | Ratio We/Wp | Main Component of Solute | Life Index (Relative Value) |
| | Material | Ratio Wm/Wn | Fe Contant (ppm) | | | |
| --- | --- | --- | --- | --- | --- | --- |
| Z4 | $TiO_2$ | 1.0/100 | 1000 | 0.6 | NaOH | 70 |
| B1 | $TiO_2$ | 0.2/100 | 1000 | 0.6 | NaOH | 80 |
| B2(A1) | $TiO_2$ | 1.0/100 | 1000 | 0.6 | NaOH | 100 |
| B3 | $TiO_2$ | 2.0/100 | 1000 | 0.6 | NaOH | 100 |
| B4 | $TiO_2$ | 5.0/100 | 1000 | 0.6 | NaOH | 90 |
| Z5 | $TiO_2$ | 10/100 | 1000 | 0.6 | NaOH | 70 |

As shown in TABLE 2, the ratio Wm/Wn ranging from 0.2/100 to 5.0/100 provides a high life index.

Experimental Example 3

In Experimental Example 3, plural kinds of nickel-hydrogen storage batteries were produced by changing the metal compound added to the positive electrode mixture. Specifically, batteries C1-C7 were produced in the same method and conditions as those of producing battery A1 except that the material of the metal compound was changed as shown in TABLE 3. Each metal compound containing iron was produced in the same way as that in Experimental Example 1.

The produced batteries were activated in the same way as that in Experimental Example 1, and evaluated in the same way as that in Experimental Example 1. A part of the conditions for producing the batteries and the evaluation results are shown in TABLE 3. Batteries C1-C7 are batteries according to the present disclosure. The values of the life index in TABLE 3 are relative values normalized such that the value of the life index X of battery C1 is 100. Battery C1 is the same battery as battery A1.

TABLE 3

| Battery | Metal Compound | | | Ratio We/Wp | Main Component of Solute | Life Index (Relative Value) |
| | Material | Ratio Wm/Wn | Fe Contant (ppm) | | | |
| --- | --- | --- | --- | --- | --- | --- |
| C1(A1) | $TiO_2$ | 1.0/100 | 1000 | 0.6 | NaOH | 100 |
| C2 | $Nb_2O_3$ | 1.0/100 | 1000 | 0.6 | NaOH | 100 |
| C3 | $WO_3$ | 1.0/100 | 1000 | 0.6 | NaOH | 100 |
| C4 | $V_2O_5$ | 1.0/100 | 1000 | 0.6 | NaOH | 100 |
| C5 | $MoO_3$ | 1.0/100 | 1000 | 0.6 | NaOH | 100 |
| C6 | $ZrO_2$ | 1.0/100 | 1000 | 0.6 | NaOH | 100 |
| C7 | $Ta_2O_5$ | 1.0/100 | 1000 | 0.6 | NaOH | 100 |

As shown in TABLE 3, each case of using, as the metal compound, a compound of titanium, niobium, tungsten, vanadium, molybdenum, zirconium, or tantalum provides a large life index.

Experimental Example 4

In Experimental Example 4, plural kinds of nickel-hydrogen storage batteries were produced by changing the value of the ratio We/Wp. Specifically, batteries D1-D6 and batteries Z6 and Z7 were produced in the same method and conditions as those of producing battery A1 except that the value of the ratio We/Wp was changed as shown in TABLE 4. The value of the ratio We/Wp was changed by changing the quantity of the alkaline electrolyte 17 encased in the battery case 4.

The produced batteries were activated in the same way as that in Experimental Example 1, and evaluated in the same way as that in Experimental Example 1. A part of the conditions for producing the batteries and the evaluation results are shown in TABLE 4. Batteries D1-D6 are batteries according to the present disclosure, and batteries Z6 and Z7 are batteries of comparative examples. The values of the life index shown in TABLE 4 are relative values normalized such that the value of the life index X of battery D3 is 100. Battery D3 is the same battery as battery A1.

TABLE 4

| Battery | Metal Compound | | | Ratio We/Wp | Main Component of Solute | Life Index (Relative Value) |
|---|---|---|---|---|---|---|
| | Material | Ratio Wm/Wn | Fe Contant (ppm) | | | |
| Z6 | $TiO_2$ | 1.0/100 | 1000 | 0.30 | NaOH | 60 |
| D1 | $TiO_2$ | 1.0/100 | 1000 | 0.35 | NaOH | 80 |
| D2 | $TiO_2$ | 1.0/100 | 1000 | 0.50 | NaOH | 96 |
| D3(A1) | $TiO_2$ | 1.0/100 | 1000 | 0.60 | NaOH | 100 |
| D4 | $TiO_2$ | 1.0/100 | 1000 | 0.65 | NaOH | 100 |
| D5 | $TiO_2$ | 1.0/100 | 1000 | 0.70 | NaOH | 100 |
| D6 | $TiO_2$ | 1.0/100 | 1000 | 1.0 | NaOH | 95 |
| Z7 | $TiO_2$ | 1.0/100 | 1000 | 1.2 | NaOH | 60 |

As shown in TABLE 4, the ratio We/Wp ranging from 0.35 to 1.0 provides a high life index.

Experimental Example 5

In Experimental Example 5, plural kinds of nickel-hydrogen storage batteries were produced by changing the content rate of iron in the metal compound added to the positive electrode mixture. Specifically, batteries E1-E4 and batteries Z8 and Z9 were produced in the same method and conditions as those of producing battery A1 except that the content rate of iron in the metal compound was changed as shown in TABLE 5. The content rate of iron was changed by changing the quantity of iron ions (the iron compound) added to the solution of the material of the metal compound during producing the metal compound in the manner as described in Experimental Example 1.

The produced batteries were activated in the same way as that in Experimental Example 1, and evaluated in the same way as that in Experimental Example 1. A part of the conditions for producing the batteries and the evaluation results are shown in TABLE 5. Batteries E1-E4 are batteries according to the present disclosure, and batteries Z8 and Z9 are batteries of comparative examples. The values of the life index in TABLE 5 are relative values normalized such that the value of the life index X of battery E3 is 100. Battery E3 is the same battery as battery A1.

TABLE 5

| Battery | Metal Compound | | | Ratio We/Wp | Main Component of Solute | Life Index (Relative Value) |
|---|---|---|---|---|---|---|
| | Material | Ratio Wm/Wn | Fe Contant (ppm) | | | |
| Z8 | $TiO_2$ | 1.0/100 | 1 | 0.6 | NaOH | 60 |
| E1 | $TiO_2$ | 1.0/100 | 10 | 0.6 | NaOH | 90 |

(continued)

| Battery | Metal Compound | | | Ratio We/Wp | Main Component of Solute | Life Index (Relative Value) |
|---|---|---|---|---|---|---|
| | Material | Ratio Wm/Wn | Fe Contant (ppm) | | | |
| E2 | $TiO_2$ | 1.0/100 | 100 | 0.6 | NaOH | 95 |
| E3(A1) | $TiO_2$ | 1.0/100 | 1000 | 0.6 | NaOH | 100 |
| E4 | $TiO_2$ | 1.0/100 | 10000 | 0.6 | NaOH | 95 |
| Z9 | $TiO_2$ | 1.0/100 | 100000 | 0.6 | NaOH | 60 |

As shown in TABLE 5, the content rate of iron in the metal compound ranging from 10 to 1000 ppm provide a high life index.

Experimental Example 6

In Experimental Example 6, plural kinds of nickel-hydrogen storage batteries were produced by changing the arrangement of the negative mixture layer 1B. Specifically, a battery F1 (A1) was produced so that each of the thickness Din of the portion 11B of the negative electrode mixture layer 1B formed on the inner side (the inner circumference side) of the negative electrode current collector 1A and the thickness Dout of the portion 12B of the negative electrode mixture layer 1B formed on the outer side (the outer circumference side) of the negative electrode current collector 1A was 110 $\mu$m. A battery F2 was produced so that each of the thickness Din of the portion 11B of the negative electrode mixture layer 1B formed on the inner side of the negative electrode current collector 1A and the thickness Dout of the portion 12B of the negative electrode mixture layer 1B formed on the outer side of the negative electrode current collector 1A in the outermost circumference of the negative electrode 1 was 80 $\mu$m, and the thickness of the negative electrode mixture layer 1B (the thickness of the layer formed on one surface) in the part other than the outermost circumference was about 130 $\mu$m. A battery F3 was produced such that the thickness Dout of the portion 12B of the negative electrode mixture layer 1B formed on the outer side of the negative electrode current collector 1A in the outermost circumference of the negative electrode 1 of the wound body 16 was about 75 $\mu$m, the thickness Din of the portion 11B of the negative electrode mixture layer 1B formed on the inner side of the negative electrode current collector 1A in the outermost circumference of the negative electrode 1 of the wound body 16 was about 145 $\mu$m, and the thickness of each of the portions 11B and 12B of the negative electrode mixture layer 1B in the part other than the outermost circumference was about 110 $\mu$m. A battery F4 was produced such that the thickness Din of the portion 11B of the negative electrode mixture layer 1B formed on the inner side of the negative electrode current collector 1A in the outermost circumference of the negative electrode 1 of the wound body 16 was about 105 $\mu$m, the thickness Dout of the portion 12B of the negative electrode mixture layer 1B formed on the outer side of the negative electrode current collector 1A in the outermost circumference of the negative electrode 1 of the wound body 16 was about 55 $\mu$m, and the thickness of each of the portions 11B and 12B of the negative electrode mixture layer 1B in the part other than the outermost circumference was about 130 $\mu$m. Batteries F2-F4 were produced in the same method and conditions as those of producing battery A1 except that these negative electrodes 1 were used. Battery F1 was made the same as battery A1.

The produced batteries were activated in the same way as that in Experimental Example 1, and evaluated in the same way as that in Experimental Example 1. A part of the conditions for producing the batteries and the evaluation results are shown in TABLE 6. Batteries F1-F4 are batteries according to the present disclosure. The values of the life index in TABLE 6 are relative values normalized such that the value of the life index X of battery F1 is 100.

TABLE 6

| Battery | Metal Compound | | | Ratio We/Wp | Main Component of Solute | Life Index (Relative Value) |
|---|---|---|---|---|---|---|
| | Material | Ratio Wm/Wn | Fe Contant (ppm) | | | |
| F1(A1) | $TiO_2$ | 1.0/100 | 1000 | 0.6 | NaOH | 100 |
| F2 | $TiO_2$ | 1.0/100 | 1000 | 0.6 | NaOH | 105 |
| F3 | $TiO_2$ | 1.0/100 | 1000 | 0.6 | NaOH | 105 |
| F4 | $TiO_2$ | 1.0/100 | 1000 | 0.6 | NaOH | 110 |

As shown in TABLE 6, either one of the above-described configurations (6)-(8) provides a large life index.

Experimental Example 7

In Experimental Example 7, plural kinds of nickel-hydrogen storage batteries were produced by changing the material of the alkaline electrolyte solution 17. Specifically, a solute of the alkaline electrolyte solution 17 of a battery G2 was made by mixing KOH, NaOH and LiOH in a mixing ratio as KOH : NaOH : LiOH = 2 : 7 : 0.5 (mol ratio). The concentration of the alkaline electrolyte 17 and the quantity of the alkaline electrolyte 17 per an apparent area of 1 cm$^2$ were the same as those of the alkaline electrolyte 17 of battery A1. A battery G2 was produced in the same method and conditions as those of producing battery A1 except that this alkaline electrolyte 17 was used. Battery G1 was made the same as battery A1.
The produced batteries were activated in the same way as that in Experimental Example 1, and evaluated in the same way as that in Experimental Example 1. A part of the conditions for producing the batteries and the evaluation results are shown in TABLE 7. Batteries G1 and G2 are batteries according to the present disclosure. The values of the life index in TABLE 7 are relative values normalized such that the value of the life index X of battery G1 is 100.

TABLE 7

| Battery | Metal Compound | | | Ratio We/Wp | Main Component of Solute | Life Index (Relative Value) |
|---|---|---|---|---|---|---|
| | Material | Ratio Wm/Wn | Fe Contant (ppm) | | | |
| G1(A1) | TiO$_2$ | 1.0/100 | 1000 | 0.6 | NaOH | 100 |
| G2 | TiO$_2$ | 1.0/100 | 1000 | 0.6 | KOH | 85 |

As shown in TABLE 7, NaOH as the main component of the solute provides a large life index.

INDUSTRIAL APPLICABILITY

The present disclosure is applicable to the alkaline storage batteries.

REFERENCE MARKS IN DRAWINGS

1    negative electrode

2    positive electrode
3    separator
4    battery case
7    sealing body
8    insulating gasket
9    positive electrode current collector
10   alkaline storage battery

**Claims**

**1.** An alkaline storage battery comprising a positive electrode, a negative electrode, a separator disposed between the positive electrode and the negative electrode, and an alkaline electrolyte, wherein

the positive electrode includes a positive electrode current collector and a positive electrode mixture supported by the positive electrode current collector,
the positive electrode mixture contains a nickel and a metal compound, the nickel compound being a positive electrode active material,
the metal compound is a compound of at least one metal element selected from the group consisting of titanium, niobium, tungsten, vanadium, molybdenum, zirconium, and tantalum,
a ratio Wm/Wn ranges from 0.2/100 to 5.0/100 where Wm is a mass of the metal compound contained in the positive electrode mixture, and Wn is a mass of the nickel compound contained in the positive electrode mixture in terms of nickel hydroxide,
the metal compound contains iron at a mass ratio ranging from 10 ppm to 10000 ppm, and
a ratio We/Wp ranges from 0.35 to 1.0, where We is a mass of the alkaline electrolyte and Wp is a mass of the positive electrode mixture.

2. The alkaline storage battery according to claim 1, wherein

the positive electrode, the negative electrode, and the separator are stacked on one another and wound to form a wound assembly,
the negative electrode includes a negative electrode current collector and a negative electrode mixture layer disposed on the negative electrode current collector,
the negative electrode mixture layer contains a hydrogen-absorbing alloy,
an outermost circumference of the negative electrode in the wound assembly is located outer than an outermost circumference of the positive electrode in the wound assembly, and
a mass of the hydrogen-absorbing alloy per a unit area in the outermost circumference of the negative electrode is smaller than a mass of the hydrogen-absorbing alloy per a unit area in a part of the negative electrode other than the outermost circumference of the negative electrode.

3. The alkaline storage battery according to claim 2, wherein a thickness of the negative electrode mixture layer in the outermost circumference of the negative electrode is thinner than a thickness of the negative electrode mixture layer in a part of the negative electrode mixture layer inner than the outermost circumference of the negative electrode.

4. The alkaline storage battery according to claim 2, wherein

the negative electrode is wound such that the negative electrode mixture layer in the outermost circumference of the negative electrode has a first portion that is disposed on an outer side of the negative electrode current collector and a second portion that is disposed on an inner side of the negative electrode current collector, and
a thickness of the first portion of the negative electrode mixture layer is thinner than a thickness of the second portion of the negative electrode mixture layer.

5. The alkaline storage battery according to any one of claims 1 to 4, wherein

the alkaline electrolyte contains sodium hydroxide and potassium hydroxide,
a concentration of the sodium hydroxide in the alkaline electrolyte is higher than a concentration of the potassium hydroxide in the alkaline electrolyte.

6. The alkaline storage battery according to any one of claims 1 to 4, wherein the alkaline electrolyte contains sodium hydroxide and does not contain potassium hydroxide.

# FIG. 1

FIG. 2

## INTERNATIONAL SEARCH REPORT

| International application No. |
|---|
| **PCT/JP2023/007920** |

| A. | CLASSIFICATION OF SUBJECT MATTER |
|---|---|

*H01M 10/30*(2006.01)i; *H01M 4/24*(2006.01)i; *H01M 4/32*(2006.01)i; *H01M 4/62*(2006.01)i
FI:  H01M10/30 Z; H01M10/30 A; H01M4/62 C; H01M4/32; H01M4/24 J

According to International Patent Classification (IPC) or to both national classification and IPC

| B. | FIELDS SEARCHED |
|---|---|

Minimum documentation searched (classification system followed by classification symbols)

H01M10/30; H01M4/24; H01M4/32; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2001-266867 A (MATSUSHITA ELECTRIC IND. CO., LTD.) 28 September 2001 (2001-09-28) | 1-6 |
| A | JP 10-40948 A (TOYOTA CENTRAL RES. & DEV. LAB., INC.) 13 February 1998 (1998-02-13) | 1-6 |
| A | JP 2002-541636 A (BYD BATTERY CO., LTD.) 03 December 2002 (2002-12-03) | 1-6 |
| A | JP 2005-56679 A (SANYO ELECTRIC CO., LTD.) 03 March 2005 (2005-03-03) | 1-6 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| International application No. |
| --- |
| **PCT/JP2023/007920** |

| Patent document cited in search report | | | Publication date (day/month/year) | Patent family member(s) | | | Publication date (day/month/year) |
| --- | --- | --- | --- | --- | --- | --- | --- |
| JP | 2001-266867 | A | 28 September 2001 | US | 2001/0024751 | A1 | |
| | | | | EP | 1137087 | A2 | |
| | | | | CN | 1314721 | A | |
| JP | 10-40948 | A | 13 February 1998 | (Family: none) | | | |
| JP | 2002-541636 | A | 03 December 2002 | US | 2001/0000484 | A1 | |
| | | | | WO | 2000/060688 | A1 | |
| | | | | EP | 1195832 | A1 | |
| | | | | CN | 1269615 | A | |
| JP | 2005-56679 | A | 03 March 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10040948 A
- JP 4474722 B

- JP 2002298840 A